# DEMANDE DE BREVET EUROPEEN

(11) **EP 0 540 411 A1**
(43) Date de publication de la demande: **05.05.1993**
(21) Numéro de dépôt: 92402914.3
(22) Date de dépôt: 27.10.1992
(51) Int. Cl.: H04N 7/173

(54) **Interface de raccordement d'un moniteur de télévision à un réseau local domestique**

(30) Priorité: 31.10.1991 FR 9113468
(71) Demandeur: TELEDIFFUSION DE FRANCE, F-75932 Paris Cédex 15 (FR)
(72) Inventeur: Bellamy, Hervé, F-57070 Metz (FR); Jean, Philippe, F-57070 Metz (FR)
(74) Mandataire: Bloch, Gérard

(57) **Abrégé**

L'interface est agencée pour coupler un moniteur de récepteur de télévision (9) à prise péri-informatique (13) à des voies bidirectionnelles de communication (8) d'un réseau local domestique, associées à des voies de transmission de programmes audiovisuels (11) du réseau, dans une gamme de fréquences HF laissées disponibles par la transmission des programmes audiovisuels.

L'interface permet donc d'intégrer fonctionnellement un téléviseur à un rése'au local domestique.

## Description

Un réseau local domestique, ou domotique, (RLD) est constitué d'un réseau de voies de télévision et de radio et de voies bidirectionnelles de communication, généralement numérique, ramifiées depuis une station de tête de réception de programmes de télévision et de radio, d'une part, et un terminal de gestion, ou superviseur ou gérant, d'autre part, vers des terminaux d'usager, ou domotiques, raccordés chacun au réseau de voies par une prise HF, associée à une prise radio et à une prise TV des voies de télévision à laquelle un appareil récepteur de télévision, ou téléviseur, peut être raccordé directement ou à travers le terminal.

Les liaisons entre le gérant et les terminaux d'usager s'effectuent dans les deux sens à deux fréquences différentes, respectivement, et elles s'établissent à travers un transposeur de fréquences, généralement associé à la station de tête, et à travers des modems associés au gérant et aux terminaux d'usager, respectivement.

Chaque terminal d'usager comporte, outre son modem, un coffret interface de liaison à une pluralité possible d'appareils et équipements de l'usager, tels que des capteurs et actionneurs et autres appareils ménagers ou de bureau.

Le document FR-A-2656188 propose un tel réseau local domestique, câblé, à deux canaux de transmission pour les échanges entre le gérant et les terminaux, l'un, la voie descendante, du gérant vers les terminaux, dans la bande 50-80 MHz, l'autre, la voie montante, ou de retour des terminaux vers le gérant, dans la bande 10-30 MHz. Dans ce cas, les modems fonctionnent, à l'émission, dans la bande de la voie de retour et, à la réception, dans la bande de la voie descendante.

Les récepteurs de télévision, qui peuvent donc être raccordés soit à une prise TV du réseau RLD , soit à une prise d'antenne individuelle ou collective classique, fonctionnent totalement indépendamment des terminaux d'usager, même dans le cas où leur branchement s'effectue à travers ces terminaux.

Un récepteur de télévision comporte un écran d'affichage, appelé moniteur. Dans le cas d'un récepteur moderne, on peut isoler le moniteur du reste de l'appareil et lui envoyer directement des données à afficher par l'intermédiaire d'une prise péri-informatique dite "péritel".

L'idée de la demanderesse, qui est à l'origine de l'invention de la présente demande, est d'intégrer fonctionnellement les téléviseurs d'usager à un réseau RLD, de pouvoir les connecter aux voies bidirectionnelles de communication associées aux voies de télévision et de radio et donc de valoriser ce réseau de voies en le transformant en un réseau de voies de service interactives et, finalement, de proposer un terminal domotique interactif avec écran de télévision adapté au dialogue homme - machine.

A cet effet, la présente invention concerne une interface de raccordement d'un moniteur de télévision, caractérisée par le fait qu'elle est agencée pour coupler un moniteur de récepteur de télévision à prise péri-informatique à des voies bidirectionnelles de communication d'un réseau local domestique, associées à des voies de transmission de programmes audiovisuels du réseau, dans une gamme de fréquences HF laissées disponibles par la transmission des programmes audiovisuels.

Certes, on connaissait déjà des moniteurs, intégrés dans des terminaux vidéotex interactifs, en l'occurrence de la marque déposée Minitel, destinés à être couplés à des voies bidirectionnelles de communication, mais d'un réseau téléphonique et absolument pas d'un réseau de télévision et de radio. Et c'est précisément dans cette transposition d'un réseau téléphonique à un réseau de distribution de programmes audiovisuels que réside toute l'activité inventive de l'invention de la présente demande.

Dans la forme de réalisation préférée de l'invention, l'interface est agencée pour être couplée à des voies, sur lesquelles les communications s'effectuent, dans un sens, dans la bande de fréquences 10-30 MHz, et, dans l'autre sens, dans la bande de fréquences 50-80 MHz.

L'interface de l'invention est agencée pour être couplée aux voies du réseau par un modem qui peut être intégré à l'interface.

De même, l'interface peut être intégrée au récepteur de télévision associé.

L'invention sera mieux comprise à l'aide de la description suivante de l'interface de l'invention et d'un réseau local domestique dans lequel elle s'intègre, en référence au dessin annexé, sur lequel :
- la figure 1 est un schéma du réseau ;
- la figure 2 est un schéma d'un terminal d'usager du réseau ;
- la figure 3 est une représentation schématique de l'architecture structurelle de l'interface et
- la figure 4 est une illustration de l'architecture du logiciel de l'interface.

L'interface qui va maintenant être décrite est destinée à raccorder un récepteur de télévision, ou téléviseur, et plus exactement sa partie moniteur, à un réseau local domestique, en l'espèce câblé, de voies de transmission de programmes de télévision et de radio et de voies associées de communication, ici numérique - réseau du type de celui qui est parfaitement décrit dans le document FR-A-2656188 et qu'il est donc inutile de décrire à nouveau ici. Le lecteur de la présente demande est seulement renvoyé à ce document et prié de le considérer comme partie intégrante du présent document.

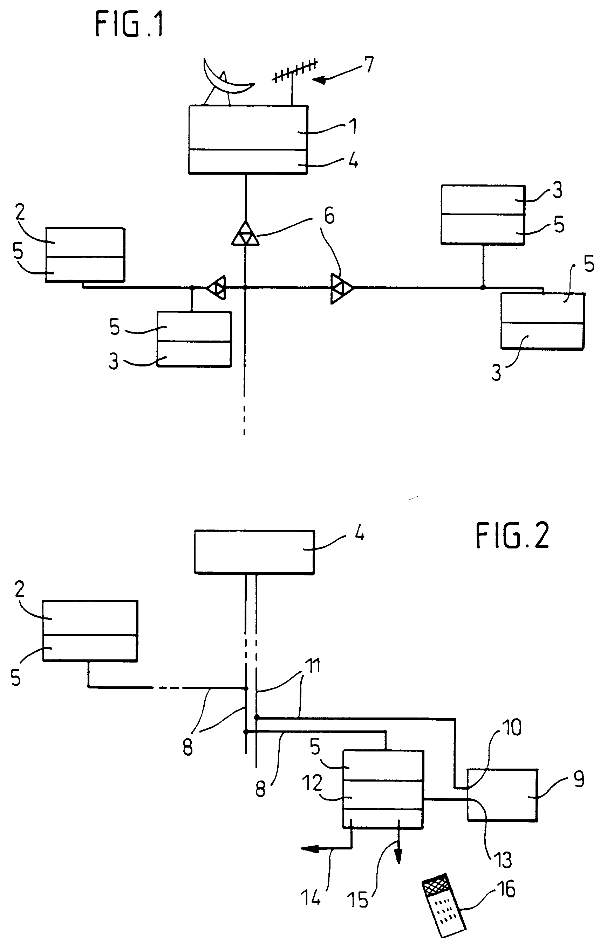

Globalement, il sera quand même rappelé, en référence à la figure 1, que le réseau est ramifié, depuis une station de tête 1, réceptrice de programmes de télévision et, en général, audiovisuels, et un gérant de ressources 2, vers une pluralité de terminaux domotiques 3 associés à des téléviseurs à prise péri-informatique, qu'un transposeur de fréquences 4 est topographiquement associé à la station de tête 1 et qu'à chaque terminal 3 ainsi qu'au gérant 2 est fonctionnellement associé un modem 5, une pluralité d'amplificateurs bidirectionnels 6 étant insérés dans le réseau. Les modems 5 et le transposeur 4 sont réglés ici pour que les modems émettent à la fréquence 29 MHz, de la bande 10-30 MHz, et reçoivent à la fréquence 70 MHz, de la bande 50-80 MHz. Les antennes collectives 7 de la station de tête 1 sont agencées pour recevoir des émissions classiques, dans le bande 88-860 MHz, et des émissions de satellites, dans la bande intermédiaire satellite 950-1 750 MHz, la bande 88-108 MHz pouvant être réservée à la réception de programmes radio FM.

Un peu plus précisément, et en référence à la figure 2, les modems 5 sont raccordés aux voies de communication numérique 8 et, chaque téléviseur 9, par sa prise TV ordinaire 10, aux voies de transmission de programmes audiovisuels 11, voies 8 et 11 auxquelles est aussi raccordé le transposeur 4 de la station de tête 1.

L'interface 12 est raccordée au téléviseur associé 9 par sa prise péri-informatique 13. L'interface 12 peut aussi être raccordée, par un bus 14, au réseau téléphonique, éventuellement par l'intermédiaire d'un terminal vidéotex, et, par un autre bus 15, domestique ou domotique, à des capteurs et actionneurs comme une sonde de température, un détecteur d'alarme, une commande de chauffage, etc...

L'objet de l'interface 12 est de saisir des informations provenant des voies de communication 8, de les traiter et, éventuellement, de les afficher sur le moniteur du téléviseur 9. Le dialogue entre l'usager et le gérant 2 s'effectue ici à l'aide d'un coffret émetteur 16 de télécommande de l'interface, par signaux infrarouge, grâce à quoi une pluralité de menus arborescents peuvent être affichés à l'écran. Le coffret 16 est un coffret classique pourvu notamment d'un clavier de touches et de diodes infrarouge. Bien entendu, la télécommande d'interface et la télécommande de téléviseur sont compatibles, c'est-à-dire qu'elles n'agissent pas l'une sur l'autre.

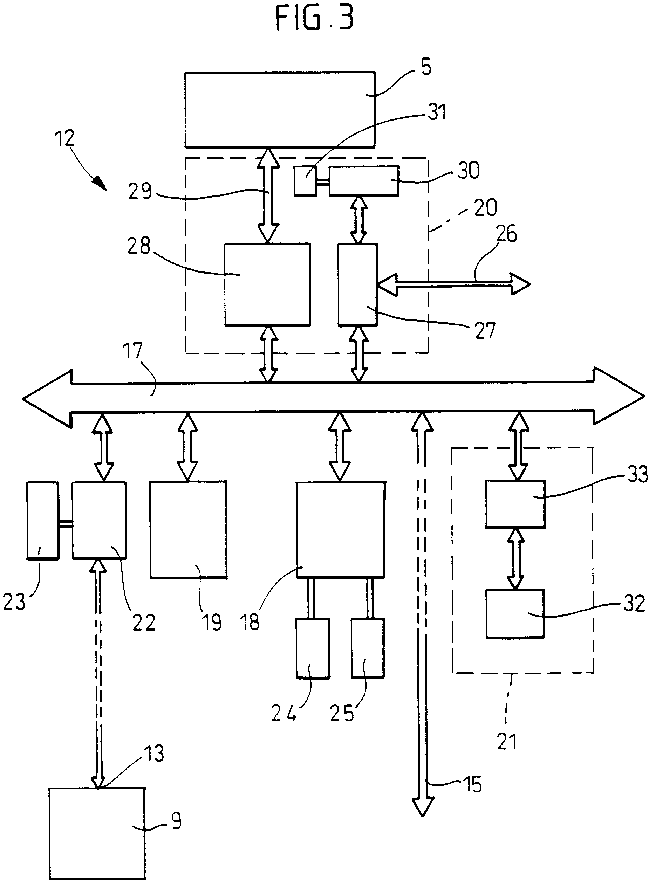

L'architecture structurelle de l'interface 12, en référence à la figure 3, est bâtie autour d'un bus interne 17 auquel sont reliés, par l'intermédiaire d'autres bus secondaires, un module de traitement 18, un module de mémorisation 19, un module de communication 20 et un module de dialogue 21.

Le module de traitement 18 est constitué d'un microprocesseur, ici de 16/32 bits, auquel sont reliés une horloge 24 et un commutateur de remise à zéro 25, et traite les informations provenant des voies de communication 8 et, à l'aide d'un processeur graphique 22 relié au téléviseur 9 par sa prise péri-informatique 13, les affiche sur l'écran de téléviseur. On notera ici qu'il est ainsi possible d'incruster ces informations sur les images de télévision apparaissant à l'écran et provenant des voies audiovisuelles 11.

Au processeur graphique 22 est ici associée une mémoire RAM 23.

Le module de mémorisation 19, comprenant des mémoires RAM, des mémoires PROM et des mémoires EEPROM, ces dernières pour le stockage des logiciels, permet aussi de stocker les informations provenant des voies de communication 8.

Le module de communication 20, fonctionnellement séparé du modem 5, assure les communications avec l'extérieur, c'est-à-dire avec le réseau 8, par le modem 5, et avec un bus I²C 26, par un bloc d'adaptation intégré 27. La liaison avec le modem 5 s'effectue par un émetteur-récepteur UART 28 et une liaison série 29.

Le système I²C, bien connu maintenant de l'homme du métier, est constitué de composants reliés entre eux par des bus de données et d'horloge particuliers et entre lesquels les échanges s'effectuent selon un protocole également particulier, les particularités de ces bus et de ce protocole étant celles qui sont clairement définies dans le document EP-A-O 051 332. Le système I²C a été inventé et mis au point par la Société N.V. Philips'Gloeilampenfabrieken et compte-tenu de la description qui en est donnée dans ce document, on renverra purement et simplement ici aussi le lecteur de la présente demande à ce document.

En l'espèce, un compteur horaire 30, associé à une mémoire RAM 31, est relié au bus I²C 26 par le bloc d'adaptation 27 pour disposer en permanence de l'heure et de la date.

C'est encore par le module de communication 20 qu'est géré le protocole du bus domestique 15 et que pourrait être aussi géré le bus de commande du téléviseur 9 - un bus D₂ ou I²C - pour n'avoir à utiliser qu'un seul coffret pour télécommander et l'interface et le téléviseur.

Le module de dialogue 21 permet d'assurer la gestion de la télécommande infrarouge en transmettant au processeur de traitement 18 les ordres émis par le coffret 16. A cet effet, le module de dialogue 21 comporte un récepteur 32, associé à l'émetteur du coffret 16, et un registre 33 relié au bus interne 17.

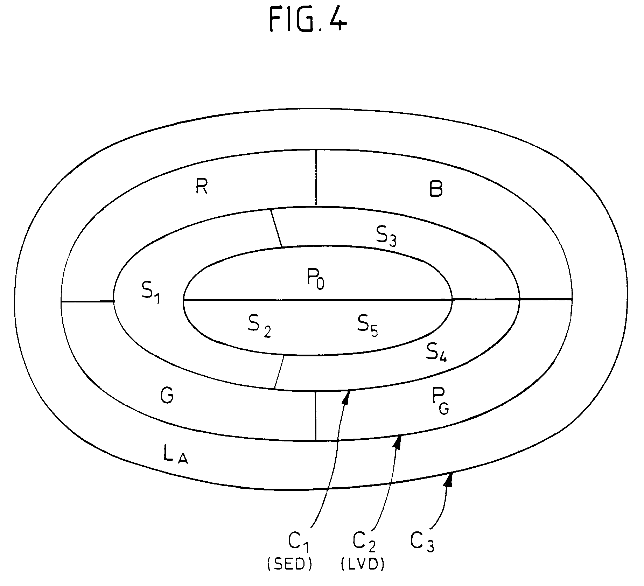

Le logiciel de l'interface 12, stocké dans la mémoire EEPROM du module 19, et en référence à la figure 4, est structuré en trois couches C₁, C₂, C₃.

La première couche C₁ concerne l'exploitation domotique ; elle est appelée "système d'exploitation domotique" (SED). Elle est constituée d'une série de routines logicielles assurant les fonctions suivantes :
- .S₁ :: initialisation et modifications des paramètres de configuration des éléments périphériques de l'interface (bus I²C, liaison série 29 entre l'UART 28 et le modem 5, ...) ;
- .S₂ :: traitement des interruptions liées aux événements extérieurs, tels que l'actionnement d'une touche du coffret de télécommande 16, la réception d'un caractère sur la liaison série 29, ...) ;
- .S₃ :: gestion dynamique du module de mémorisation 19 ;
- .S₄ :: gestion des fichiers programmés et stockés dans le module de mémorisation 19 ;
- .S₅ :: gestion en temps réel des informations du réseau.

Le système d'exploitation domotique est donc un système multitâche. C'est pourquoi il inclut un programme Po d'ordonnancement des tâches à exécuter, une table de ces tâches et donc aussi une file d'attente pour ranger les tâches à exécuter par niveau de priorité.

La seconde couche C₂ concerne le langage vidéo domotique (LVD). Sa fonction est de permettre le graphisme G sur l'écran de télévision. C'est cette couche qui confère à l'interface son caractère interactif et qui assure son ergonomie. C'est grâce à elle qu'est assurée l'interactivité entre les ordres donnés par l'usager et transmis par le coffret de télécommande et l'affichage à l'écran de télévision.

La couche C₂ comporte des primitives graphiques P_{G} permettant de créer une base B d'icônes ou d'autres symboles graphiques tels qu'un curseur que l'usager peut déplacer sur l'écran par actionnement de touches de direction du coffret 16.

La couche C₂ comporte aussi des routines R de gestion multifenêtre de l'écran.

La troisième couche C₃ contient le logiciel d'application L_{A} réalisé à partir des deux autres couches C₁, C₂.

Les applications de l'interface qui vient d'être décrite sont variées. A titre d'exemple, l'application hôtelière va être brièvement décrite.

Un serveur informatique est installé à la réception de l'hôtel ; chaque chambre est pourvue d'un téléviseur et d'une interface de l'invention à laquelle sont raccordés, par un bus domestique, un capteur de température, un relais électrique, un interrupteur HF et un détecteur de présence de l'occupant de la chambre. Les services suivants peuvent ainsi être rendus : messagerie, régulation de température avec affichage d'une consigne, surveillance de chambre (alarme, incendie), service de restauration en chambre, service de tourisme, réveil, télévision payante (TV pay), etc... A chaque service proposé correspond une icône. La télécommande infrarouge permet le dialogue entre l'interface et le serveur à l'aide des menus informatiques arborescents pouvant être affichés à l'écran et de touches du coffret de télécommande. Comme touches, on peut prévoir une touche de déplacement de curseur pour choisir un menu informatique, une touche ENVOI, pour valider un choix ou un service demandé, une touche INFO, pour afficher à l'écran des informations sur l'utilisation du terminal, une touche MENU, pour la configuration du terminal et l'entrée d'un mot de passe, dix touches numérotées de 0 à 9, pour la programmation de la température de la chambre.

Plus particulièrement encore, après mise en service de l'interface et du téléviseur, le terminal permet d'être informé de la réception d'un message, par une icône clignotant sur l'écran, de demander l'affichage à l'écran du message, par une touche du coffret de télécommande, et finalement de prendre connaissance du message à l'écran.

## Revendications

1. Interface de raccordement d'un moniteur de télévision, caractérisée par le fait qu'elle est agencée pour coupler un moniteur de récepteur de télévision (9) à prise péri-informatique (13) à des voies bidirectionnelles de communication (8) d'un réseau local domestique, associées à des voies de transmission de programmes audiovisuels (11) du réseau, dans une gamme de fréquences HF laissées disponibles par la transmission des programmes audiovisuels.

2. Interface de raccordement selon la revendication 1, agencée pour être couplée à des voies (8), sur lesquelles les communications s'effectuent, dans un sens, dans la bande de fréquences 10-30 MHz, et, dans l'autre sens, dans la bande de fréquences 50-80 MHz.

3. Interface de raccordement selon l'une des revendications 1 et 2, agencée pour être couplée aux voies bidirectionnelles de communication (8) par un modem (5) intégré.

4. Interface de raccordement selon l'une des revendications 1 à 3, intégrée au récepteur de télévision associé (9).

5. Interface de raccordement selon l'une des revendications 1 à 4, comportant un bus interne (17) auquel sont reliés un module de traitement à microprocesseur (18), un module de mémorisation (19), un module de communication (20), un module de dialogue (21) et un processeur graphique (22).

6. Interface de raccordement selon la revendication 5, dans laquelle le module de communication (20) comporte un bloc (27) d'adaptation à un bus I²C et un émetteur-récepteur UART (28) et une liaison série (29) de liaison à un modem (5).

7. Interface de raccordement selon l'une des revendications 1 à 6, agencée pour gérer un bus de commande du récepteur de télévision (9).

8. Interface de raccordement selon l'une des revendications 1 à 7, comportant un récepteur (32) de télécommande infrarouge.

9. Interface de raccordement selon l'une des revendications 1 à 8, comportant trois couches logiciel, une couche multitâche d'exploitation domotique (C₁), une couche de langage vidéo domotique (C₂ ) et une couche d'application (C₃).
